Europäisches Patentamt

European Patent Office

Office européen des brevets

(11) Veröffentlichungsnummer: **0 260 331**
B1

# EUROPÄISCHE PATENTSCHRIFT

(45) Veröffentlichungstag der Patentschrift:
**11.04.90**

(51) Int. Cl.⁴: **A41H 43/02**, B65G 17/20

(21) Anmeldenummer: **86112725.6**

(22) Anmeldetag: **15.09.86**

(54) **Verfahren und Vorrichtung zur Relativpositionierung von biegeschlaffen Werkstücklagen.**

(43) Veröffentlichungstag der Anmeldung:
**23.03.88 Patentblatt 88/12**

(45) Bekanntmachung des Hinweises auf die Patenterteilung:
**11.04.90 Patentblatt 90/15**

(84) Benannte Vertragsstaaten:
**DE FR GB IT SE**

(56) Entgegenhaltungen:
**DE-A- 3 247 327
DE-A- 3 436 965
DE-A- 3 509 974
US-A- 2 526 253
US-A- 3 422 950
US-A- 3 731 205
US-A- 4 167 996**

(73) Patentinhaber: **Pfaff Industriemaschinen GmbH,
Königstrasse 154, D-6750 Kaiserslautern(DE)**

(72) Erfinder: **Moll, Philipp, Königsberger Strasse 72,
D-5100 Aachen(DE)**
Erfinder: **Kaiser, Albrecht, Heide 8, D-4973 Vlotho(DE)**

(74) Vertreter: **Klein, Friedrich, Königstrasse 154,
D-6750 Kaiserslautern(DE)**

## Beschreibung

Die Erfindung betrifft ein Verfahren zum Zuführen und Positionieren wenigstens zweier gemeinsam zu behandelnder oder miteinander zu verbindender biegeschlaffer Werkstücklagen.

Bei einem durch die DE-OS 27 17 960 bekannten Verfahren zum Ausrichten und Zusammenführen von biegeschlaffen Werkstücklagen werden diese einzeln auf einer horizontalen Unterlage aufgelegt. Anschließend wird durch Abtasten wenigstens eines Teiles ihrer Kanten die momentane Ausrichtlage festgestellt und mit Hilfe der dabei gewonnenen Meßwerte ein Ausrichtvorgang durchgeführt, wobei die Werkstücklagen auf der Unterlage verschoben werden. Voraussetzung für ein einwandfreies Ausrichtergebnis ist jedoch, daß sich die Werkstücklagen in einem abtastgerechten Zustand befinden, d. h., die Werkstücklagen müssen ebenflächig ausgebreitet sein.

Während kleinflächige und relativ steife Werkstücklagen ohne besondere Maßnahmen von allein eine ebenflächige Lage einnehmen, muß bei großflächigen und zusätzlich dünnen und flexiblen Werkstücklagen darauf geachtet werden, daß Falten oder Wellen und insbesondere umgeschlagene Randteile vermieden oder beseitigt werden. Daher müssen nach dem Auflegen der Werkstücklagen diese ggf. noch von Hand glattgestrichen werden. Aufgrund des Ausrichtprinzips, bei dem sensorgesteuerte, punktförmig auf die Werkstücklagen einwirkende Halteelemente eine Relativbewegung zwischen der Unterlage und den Werkstücklagen erzwingen, besteht bei der Ausrichtung von sehr flexiblen Werkstücklagen die Gefahr, daß diese durch die auftretenden Reibkräfte verformt werden.

Durch die DE-OS 34 36 965 ist ein Verfahren zum Ausrichten von biegeschlaffen Werkstücklagen bekannt, bei dem diese durch spezielle Fördereinrichtungen eben und verformungsarm auf einer Unterlage abgelegt werden. Es wird somit ein besonderer technischer Aufwand getrieben, um die Werkstücklagen zunächst einmal in eine abtastgerechte, d. h. ebenflächig ausgebreitete Ausgangslage für das anschließende Abtasten und Ausrichten zu bringen. Auch das positionsgenaue Zusammenführen mehrerer anschließend gemeinsam zu bearbeitender Werkstücklagen ist verhältnismäßig aufwendig, da hierfür eine mit Sauggreifern versehene, exakt zu steuernde Fördereinrichtung verwendet wird.

Der Erfindung liegt die Aufgabe zugrunde, ein Verfahren zur Relativpositionierung wenigstens zweier gemeinsam zu behandelnder oder miteinander zu verbindender biegeschlaffer Werkstücklagen zu schaffen, bei dem die Werkstücklagen auf einfache Weise in eine abtastgerechte Lage bringbar und in ebenfalls einfacher Weise ausricht-bzw. zusammenfügbar sind. Die Aufgabe wird durch die im Kennzeichenteil des Anspruches 1 angegebenen Merkmale gelöst.

Bei einer die Lage des Flächenschwerpunktes berücksichtigenden im wesentlichen linienförmigen Halterung entlang einer Kante einer Werkstücklage nimmt der herabhängende Teil der Werkstücklage durch die Wirkung der Schwerkraft eine faltenfreie ebenflächige Lage ein, wodurch sich die abzutastende Kontur in einem formstabilen abtastgerechten Zustand befindet.

In der herabhängenden Lage läßt sich auch das gegenseitige Positionieren zweier oder mehrerer Werkstücklagen vergleichsweise einfach durchführen, indem diese bei Einhaltung eines ausreichend großen gegenseitigen Abstandes voneinander unbeeinflußt relativ zueinander bewegt und ausgerichtet werden können. Nach ihrer Ausrichtung brauchen sie dann nur noch aneinandergedrückt und somit in ihrer Relativlage fixiert zu werden. Auf diese Weise wird für das Zusammenführen der anschließend gemeinsam zu behandelnden oder miteinander zu verbindenden Werkstücklagen keine gesonderte Fördereinrichtung benötigt, wie sie sonst für das Zusammenführen von in horizontaler Lage ausgerichteten Werkstücken erforderlich ist.

Durch das DE-GM 66 04 491 ist eine Vorrichtung bekannt, mit der in fahrbaren Klammern in hängender Lage aufgenommene biegeschlaffe Werkstücklagen von einer kontinuierlich laufenden Hauptbahn mit Hilfe von Adressenteilen und Lesegeräten wahlweise auf Hilfsbahnen ausgeschleust und Bearbeitungsstationen zugeführt werden. Da aber den einzelnen Bearbeitungsstationen keine Ausrichtstation vorgelagert ist, ferner die Werkstücklagen einzeln bearbeitet werden und deshalb keine Relativpositionierung zweier oder mehrerer Werkstücklagen stattfindet und schließlich die Werkstücklagen punktförmig geklammert sind und deshalb in einer für ein Kantenabtasten ungeeigneten ungeordnet gefalteten Weise herabhängen, konnte das mit dieser Vorrichtung durchgeführte, Transportverfahren keine Anregung zur Lösung der erfindungsgemäßen Aufgabe gegeben haben.

Das Verfahren nach Anspruch 2 ermöglicht ein vereinfachtes Einhängen einer Werkstücklage in eine entsprechende Klammer bzw. Halterung, indem die Werkstücklage nacheinander abschnittsweise eingespannt werden kann.

Die Verfahren nach den Ansprüchen 3 und 4 geben zwei alternative Förderverfahren an, indem die gemeinsam zu behandelnden oder miteinander zu verbindenden Werkstücklagen entweder auf separaten Förderbahnen oder einer gemeinsamen Förderbahn mit Ausschleusstrecken zusammengeführt werden.

Die übrigen Ansprüche geben vorteilhafte Weiterbildungen des Verfahrens sowie Ausgestaltungen der Vorrichtung zur Durchführung des Verfahrens an.

Die Erfindung ist anhand eines in der Zeichnung dargestellten Ausführungsbeispieles erläutert.

Es zeigen:

Fig. 1 eine Ansicht einer vereinfacht dargestellten Fördereinrichtung;
Fig. 2 eine Draufsicht auf die Fördereinrichtung;
Fig. 3 eine Schnittdarstellung zweier Laufwagen und deren Klammern nach Linie III - III der Fig. 2;

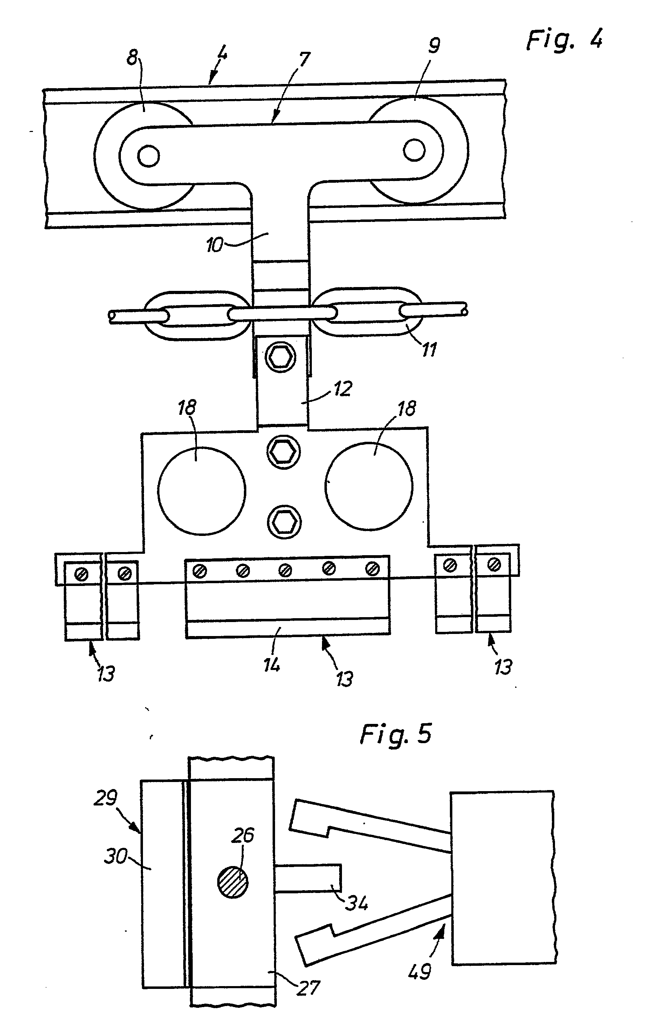

Fig. 4 eine Ansicht eines Laufwagens mit starrer Halterung für drei Klammern;

Fig. 5 eine Draufsicht auf eine Greifvorrichtung eines Roboters in bezug auf die Griffleiste der beweglichen Klammerhalterung eines Laufwagens.

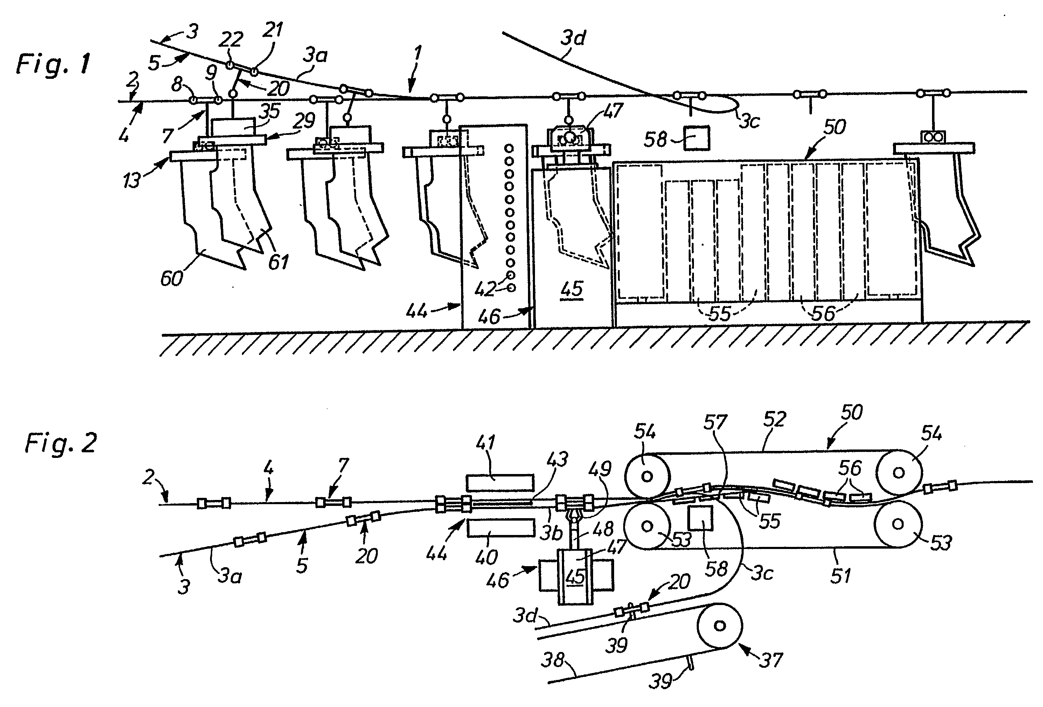

Die in den Fig. 1 und 2 schematisch und nur teilweise dargestellte Fördereinrichtung (1) weist zwei Förderbahnen (2, 3) auf. Die Förderbahn (2) ist von einem in horizontaler Ebene umlaufenden kettengetriebenen Kreisförderer (4) und die Förderbahn (3) von einem schwerkraftgetriebenen Hängebahnförderer (5) gebildet.

Der Kreisförderer (4) weist an einem nicht dargestellten Gestell befestigte Profilschienen (6) auf. Auf den Profilschienen (6) sind Laufwagen (7) angeordnet, die aus zwei Radsätzen (8, 9) und einem diese miteinander verbindenden gabelförmigen Haltebügel (10) bestehen. Am Haltebügel (10) greift eine Antriebskette (11) an ,deren Antriebsmotor nicht dargestellt ist. Am Haltebügel (10) ist eine abgekröpfte Tragplatte (12) befestigt, die an ihrem unteren Ende drei nebeneinander angeordnete Klammern (13) trägt. Jede Klammer (13) weist einen feststehenden Klammerbacken (14) und einen schwenkbaren Klammerbacken (15) auf. Die Klammerbacken (15) werden durch je eine Schenkelfeder (16) in Schließstellung gehalten. An jedem Klammerbacken (15) ist ein Betätigungsarm (17) angeordnet, durch den die jeweilige Klammer (13) geöffnet werden kann. An der Tragplatte (12) sind ferner zwei Permanentmagnete (18) befestigt.

Der Hängeförderer (5) weist an einem nicht dargestellten Gestell befestigte Profilschienen (19) auf. Auf den Profilschienen (19) sind Laufwagen (20) angeordnet, die aus zwei Radsätzen (21, 22) und einem diese miteinander verbindenden gabelförmigen Haltebügel (23) bestehen. Auf einem im Haltebügel (23) angeordneten Bolzen (24) ist ein Aufnahmestück (25) für eine Stange (26) schwenkbar gelagert. Auf der Stange (26) ist ein hohl ausgebildeter Träger (27) in vertikaler Richtung verschiebbar sowie um die Längsachse der Stange (26) verdrehbar angeordnet. Eine am unteren Ende der Stange (26) angeordnete Anschlagplatte (28) bildet eine axiale Sicherung gegen Herabfallen des Trägers (27).

Am Träger (27) sind drei nebeneinander angeordnete Klammern (29) angeordnet. Jede Klammer (29) weist einen feststehenden Klammerbacken (30) und einen schwenkbaren Klammerbacken (31) auf. Die Klammerbacken (31) werden durch je eine Schenkelfeder (32) in Schließstellung gehalten. An jedem Klammerbacken (31) ist ein Betätigung sarm (33) angeordnet, durch den die jeweilige Klammer (29) geöffnet werden kann. Am Träger (27) ist ferner eine seitlich abstehende Griffleiste (34) und gegenüberliegend eine magnetisierbare Platte (35) angeordnet.

Wenn sich ein Laufwagen (7) der Förderbahn (2) und ein Laufwagen (20) der Förderbahn (3) so weit einander nähern, daß die Permanentmagneten (18) mit der Platte (35) in Kontakt treten, sind die beiden Laufwagen (7) und (20) kraftschlüssig miteinander verbunden, wobei die Permanentmagneten (18) und die Platte (35) gemeinsam eine Koppeleinrichtung (36) bilden.

Die Förderbahn (3) hat gemäß Fig. 1 einen gegenüber der Horizontalen geneigten Abschnitt (3a) der gemäß Fig. 2 schräg auf die geradlinig verlaufende Förderbahn (2) zuläuft. Im Anschluß an den Abschnitt (3a) hat die Förderbahn (3) gemäß Fig. 2 einen horizontal und dabei parallel zur Förderbahn (2) verlaufenden Abschnitt (3b). An den Abschnitt (3b) schließt sich ein nach abwärts geneigter bogenförmiger Abschnitt (3c) an, der in einen schräg nach aufwärts gerichteten geradlinigen Abschnitt (3d) übergeht.

Neben der Förderbahn (3) ist ein Schleppförderer (37) angeordnet, der an einem umlaufenden Zugmittel (38) eine Vielzahl von mit gleichmäßigem Abstand zueinander angeordneten nach außen gerichteten Mitnehmern (39) aufweist. Ein Trum des Zugmittels (38) läuft mit geringem Abstand parallel zum Abschnitt (3d) der Förderbahn (3), wobei die Mitnehmer (39) in einer derartigen Höhe zu der Profilschiene (19) des Abschnittes (3d) verlaufen, daß sie an den Haltebügel (23) von in diesem Bereich befindlichen Laufwagen (20) angreifen können.

Am Anfang des Abschnittes (3b) der Förderbahn (3) ist eine Abtasteinrichtung (40) und dieser gegenüberliegend auf der Seite der Förderbahn (2) eine Abtasteinrichtung (41) angeordnet. Die Abtasteinrichtungen (40, 41) weisen eine Vielzahl von aus Lichtsendern und Lichtempfängern bestehenden Sensoren (42) auf, die mit einer bekannten nicht dargestellten Auswerteschaltung verbunden sind. Im Bereich der beiden Abtasteinrichtungen (40, 41) ist zwischen den beiden Förderbahnen (2, 3) eine Reflexionsplatte (43) angeordnet. Die Abtasteinrichtungen (40, 41) und die Reflexionsplatte (43) bilden gemeinsam eine Abtaststation (44).

Neben der Abtasteinrichtung (40) ist eine von einem Roboter (45) gebildete Ausrichtstation (46) angeordnet. Der Roboter (45) weist ein in vertikaler Richtung verschiebbares sowie drehbares Antriebsaggregat (47) für einen axial bewegbaren sowie drehbaren Arm (48) auf, der eine Greifvorrichtung (49) trägt.

Am Ende des Abschnittes (3b) der Förderbahn (3) ist eine kontinuierlich arbeitende Klebepresse (50) angeordnet. Sie weist zwei Transportbänder (51, 52) auf, welche über je zwei Trommeln (53, 54) laufen und einen solch geringen gegenseitigen Abstand haben, daß sich ihre einander benachbarten Trume berühren. Die Klebepresse (50) enthält ferner eine Anzahl von dem Transportband (51) zugeordneten Heizstäben (55) sowie eine gleiche Anzahl von dem Transportband (52) zugeordneten Heizstäben (56). Die Heizstäbe (55, 56) dienen zugleich als Führungsmittel für die Transportbänder (51, 52) wobei sie derart angeordnet sind, daß sich die an ihnen entlanggleitenden Trume der Transportbänder (51, 52) in einer flachen S-förmigen Bahn bewegen. Aufgrund der S-Form liegen die unter Zugspannung stehenden Transportbänder (51, 52) in diesem Bereich fest aneinander an. Die vorderen Heizstäbe (55) haben zur Oberkante des ihnen zugeordneten Transportbandes (51) einen größeren Abstand als die nachfolgenden Heizstäbe (55), wodurch das Transportband (51) in diesem Bereich einen horizontalen Abstand zum Transportband (52) hat und auf diese Weise einen keilförmigen Spalt (57) bildet.

Im Übergangsbereich zwischen dem Abschnitt (3b) und (3c) der Förderbahn (3) ist ein Elektromagnet (58) ortsfest angeordnet. Mit Hilfe des Elektromagnets (58) läßt sich während des Vorbeilaufs zweier durch die Permanentmagnete (18) und die magnetisierbare Platte (35) miteinander verbundener Laufwagen (7) und (20) ein Gegenmagnetfeld erzeugen und somit die Haltekraft der Permanentmagnete (18) neutralisieren.

Die Vorrichtung arbeitet wie folgt:

Die Arbeitsweise wird anhand des Zusammenfügens und Verbindens von Sakkovorderteilen (60) mit im Vergleich hierzu kleineren Einlagezuschnitten (61) aus heißsiegelfähigem Material erläutert.

Die in der Zuschneiderei paketweise anfallenden Sakkovorderteile (60) werden manuell vereinzelt und danach mit ihrem oberen Rand einzeln und unverformt in die Klammern (13) der Laufwagen (7) eingeführt und durch nacheinander erfolgendes Schließen der Klammern (13) abschnittsweise festgeklemmt, worauf sie ebenflächig von den Klammern (13) herabhängen. In gleicher Weise werden auch die paketweise anfallenden Einlagenzuschnitte (61) mit ihrem oberen Rand einzeln und unverformt in die Klammern (29) eingespannt, worauf auch sie ebenflächig von den Klammern (29) herabhängen.

Die Laufwagen (7) werden zwangsweise kontinuierlich angetrieben wobei sie einen gleichmäßig großen gegenseitigen Abstand haben. Die Laufwagen (20) der Förderbahn (3) werden durch eine nicht dargestellte Separiervorrichtung in derartigen zeitlichen Abständen auf dem Abschnitt (3a) zum selbsttätigen Weiterlaufen freigegeben, daß jeder Laufwagen (20) mit einem Laufwagen (7) am Übergang vom Abschnitt (3a) zum Abschnitt (3b) zusammentrifft. Dabei nähert sich die Platte (35) des Laufwagens (20) so weit den Permanentmagneten (18) des Laufwagens (7), daß diese die Platte (35) anziehen, wodurch der Laufwagen (20) kraftschlüssig mit dem Laufwagen (7) gekoppelt ist und von diesem nunmehr mitbewegt wird.

Beim Durchlauf der Werkstücklagen (60, 61) durch die Abtaststation (44) wird deren Kontur durch die Sensoren (42) abgetastet. Durch Vergleich der Signale der Abtasteinrichtung (40) mit denen der Abtasteinrichtung (41) wird die Relativlage des Einlagenzuschnittes (61) bezüglich des ihm zugeordneten Sakkovorderteiles (60) festgestellt. Sofern die Istlage des Einlagenzuschnittes (61) von der Sollage abweicht, wird der Roboter (45) aktiviert, worauf dessen Greifvorrichtung (49) die Griffleiste (34) erfaßt. Danach wird der Roboter (45) in Abhängigkeit vom Ergebnis des Vergleichs der Signale der beiden Abtasteinrichtungen (40, 41) und somit entsprechend der Abweichung der Istlage des Einlagenzuschnittes (61) von dessen Sollage gesteuert, wobei der Träger (27) mit den Klammern (29) und dem eingespannten Einlagenzuschnitt (61) für eine vertikale Ausrichtung entlang der Stange (26) verschoben, für eine horizontale Ausrichtung gemeinsam mit dem Laufwagen (20) bewegt und für eine winkelmäßige Ausrichtung mit der Stange (26) um den Bolzen (24) geschwenkt wird. Die kraftschlüssige Halterung der Platte (35) durch die Permanentmagneten (18) ist derart bemessen, daß die durch den Roboter (45) bewirkten Ausrichtbewegungen des Trägers (27) und der Klammern (29) nicht behindert werden und daß nach Beendigung des Ausrichtvorganges und nach dem Öffnen der Greifvorrichtung (49) der Träger (27) und die Klammern (29) mit dem Einlagenzuschnitt (61) die Ausrichtlage und damit die Relativlage zum Sakkovorderteil (60) beibehalten.

Nach ihrer gegenseitigen Ausrichtung werden die Werkstücklagen (60, 61) in die Klebepresse (50) eingeführt, wobei sie von den synchron zur Bewegung der Laufwagen (7) angetriebenen Transportbändern (51, 52) erfaßt werden. Nachdem der vordere Abschnitt des Einlagenzuschnittes (61) vom Transportband (51) erfaßt wurde und gegen das Sakkovorderteil (60) und das andere Transportband (52) angedrückt wird, wird durch einen auf den Betätigungsarm (33) einwirkenden, nicht dargestellten Mechanismus die vordere der drei Klammern (29) innerhalb der Spaltes (57) geöffnet und dadurch der zuvor geklammerte obere Randabschnitt des Einlagenzuschnittes (61) freigegeben. Das gleiche geschieht danach auch mit der mittleren und der hinteren Klammer (29) sobald diese in den Spalt (57) eingelaufen sin d.

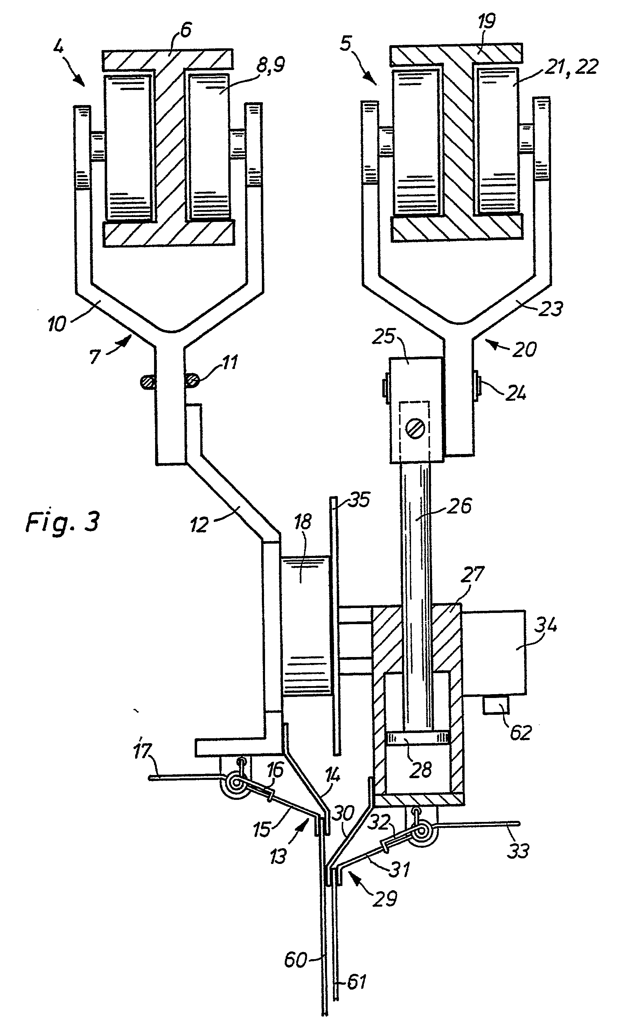

Nachdem alle Klammern (29) geöffnet worden sind, gleitet die Griffleiste (34) auf eine schräg nach aufwärts verlaufende Leiste (62) (Fig. 3), durch die der Träger (27) soweit angehoben wird, daß die Klammern (29) über die Oberkante des Transportbandes (51) hervorstehen. In der Zeit, zu der der vordere Radsatz (21) des Laufwagens (20) in den Übergangsbereich zwischen dem Abschnitt (3b) und (3c) der Förderbahn (3) gelangt, wird mit Hilfe des Elektromagnet (58) ein Gegenmagnetfeld zu den Permanentmagneten (18) erzeugt, wodurch deren Haltekraft so weit neutralisiert wird, daß sich der Laufwagen (20) ohne weiteres vom Laufwagen (7) lösen und danach durch Schwerkraftwirkung in den Mitnahmebereich des Schleppförderers (37) rollen kann.

In der Klebepresse (50) wird der heißsiegelfähige Einlagenzuschnitt (61) durch die Heizwirkung der Heizstäbe (55, 56) und die von den Transportbändern (51, 52) erzeugte Andruckkraft mit dem Sakkovorderteil (60) großflächig verklebt. Da der ursprünglich in den Klammern (29) eingespannte obere Randabschnitt des Einlagenzuschnitts (61) nach dem Durchlaufen durch den Spalt (57) in den Anpreßbereich der Transportbänder (51, 52) und den Wirkbereich der längeren Heizstäbe (55, 56) gelangt, wird auch er mit dem Sakkovorderteil (60) verklebt.

Nachdem die Werkstücklagen (60, 61) die Klebepresse (50) durchlaufen haben und nun gemeinsam am Laufwagen (7) hängen, werden sie entweder einer Entladestation oder einer weiteren Bearbeitungsstation zugeführt.

In einer möglichen Abwandlung der Fördereinrichtung ist nur eine Förderbahn für beide Arten von Laufwagen (7, 20) vorhanden. Diese sind abwechselnd hintereinander angeordnet und werden in Ausschleus- bzw. Verzweigungsbereichen paarweise zusammengeführt und danach gemeinsam weiterbewegt.

Ferner kann die Ausrichtlage der bewegbaren Klammerhalterung durch eine entsprechende Schwergängigkeit der Gelenke fixiert werden.

Sofern die Werkstücklagen in der herabhängenden Lage miteinander vernäht werden sollen, läßt sich dies durch eine robotergeführte Nähmaschine bewerkstelligen. In diesem Fall kann es zweckmäßig sein, die Fördereinrichtung als Schleppkreisförderer (power and free) auszubilden, wodurch die Laufwagen bedarfsweise vom Antrieb abkuppelbar und stillsetzbar sind.

## Patentansprüche

1. Verfahren zum Zuführen und Positionieren wenigstens zweier gemeinsam zu behandelnder oder miteinander zu verbindender biegeschlaffer Werkstücklagen, dadurch gekennzeichnet, daß die Werkstücklagen in ebenflächig herabhängender Lage aufeinanderzugeführt, vor ihrer gegenseitigen Berührung in vertikaler und/oder horizontaler Richtung relativ zueinander ausgerichtet und zur Durchführung des Behandlungs- oder Verbindungsvorganges gegenseitig fixiert werden.

2. Verfahren nach Anspruch 1, dadurch gekennzeichnet, daß die Werkstücklagen einzeln an wenigstens zwei im Bereich einer Kante befindlichen Punkten geklammert und im übrigen freihängend gehalten werden.

3. Verfahren nach Anspruch 1 oder 2, dadurch gekennzeichnet, daß die Werkstücklagen auf separaten Förderbahnen aufeinanderzugeführt werden.

4. Verfahren nach Anspruch 1 oder 2, dadurch gekennzeichnet, daß die gemeinsam zu behandelnden oder miteinander zu verbindenden Werkstücklagen auf einer gemeinsamen Förderbahn transportiert und in einem Ausschleusbereich zusammengeführt werden.

5. Verfahren nach einem oder mehreren der Ansprüche 1 bis 4, dadurch gekennzeichnet, daß die Kontur der Werkstücklagen wenigstens teilweise optoelektronisch abgetastet wird und die Abtastergebnisse zur gegenseitigen Ausrichtung der Werkstücklagen benutzt werden.

6. Verfahren nach Anspruch 5, dadurch gekennzeichnet, daß die Werkstücklagen parallel zueinander hängend gleichzeitig abgetastet werden.

7. Vorrichtung zur Durchführung des Verfahrens nach Anspruch 1, dadurch gekennzeichnet, daß einer Fördereinrichtung (1) mit mehreren entlang wenigstens einer Förderstrecke bewegbaren, zur Aufnahme je einer Werkstücklage (60, 61) dienenden Klammern (13, 29) eine Abtaststation (44) und eine Ausrichtstation (46) zugeordnet ist, in welcher die die Werkstücklagen (60, 61) tragenden Klammern (13; 29) zur gegenseitigen Ausrichtung der Werkstücklagen (60, 61) in Abhängigkeit vom Abtastergebnis bewegbar sind und daß die Ausrichtposition der Werkstücklagen (60, 61) durch eine Koppeleinrichtung (36) fixierbar ist.

8. Vorrichtung nach Anspruch 7, dadurch gekennzeichnet, daß die Klammern (13, 29) auf schienengeführten wenigstens zum Teil antreibbaren Laufwagen (7, 20) angeordnet und relativ zu ihnen ein- oder mehrachsig bewegbar sind und daß die Ausrichtstation (46) eine an wenigstens einer der Klammern (13; 29) angreifende Bewegungseinrichtung (45) aufweist.

9. Vorrichtung nach Anspruch 7 oder 8, dadurch gekennzeichnet, daß die Koppeleinrichtung (36) von wenigstens einem mit der Klammern (13; 29) fest verbundenen Permanentmagnet (18) und einer mit der anderen Klammer (29; 13) fest verbundenen magnetisierbaren Platte (35) gebildet ist.

10. Vorrichtung nach einem oder mehreren der Ansprüche 7 bis 9, dadurch gekennzeichnet, daß die Fördereinrichtung (1) für die Klammern (13, 29) einen zwangsläufig angetriebenen Hauptförderer (4) und mindestens einen wahlweise bewegbaren Nebenförderer (5) aufweist und diese im Bereich der Abtast- und Ausrichtstation (44, 46) sowie der Behandlungs- bzw. Bearbeitungsstation (50) mit geringem gegenseitigen Abstand parallel zueinander laufen und daß die Ausrichtstation (46) allein dem Nebenförderer (5) zugeordnet ist.

11. Vorrichtung nach Anspruch 10, dadurch gekennzeichnet, daß der Hauptförderer ein Kreisförderer (4) und der Nebenförderer ein schwerkraftgetriebener Hängebahnförderer (5) mit wenigstens einer Separiereinrichtung für die Laufwagen (20) ist.

## Claims

1. Method for delivery and positioning of at least two supple workpiece layers to be simultaneously treated or joined, characterised in that the workpiece layers are delivered towards one another in an evenly levelled suspended position; that prior to making contact with one another, they are aligned in the vertical and/or horizontal direction relative to each other; and that they are affixed to each other for execution of the treatment or the joining process.

2. Method according to claim 1, characterised in that the workpiece layers are individually clamped at at least two points in the area of an edge and are otherwise held freely suspended.

3. Method according to claim 1 or 2, characterised in that the workpiece layers are transported towards one another by way of separate conveyer tracks.

4. Method according to claim 1 or 2, characterised in that the workpiece layers to be simultaneously treated or joined are transported on a mutual conveyer track and brought together in a channelling location.

5. Method according to one or several of the claims 1 to 4, characterised in that the contour of the workpiece layers is at least partially optoelectronically scanned, and the scan results are used to align the workpiece layers with each other.

6. Method according to claim 5, characterised in that the workpiece layers are scanned simultaneously and whilst suspended parallel to each other.

7. Device for execution of the method according to claim 1, characterised in that a conveyer means (1) including several clamps (13, 29) which are movable along at least one conveyer path serving to hold each one workpiece layer (60, 91) has a scanning station (44) and an alignment station (46) wherein the clamps (13; 29) holding workpiece layers (60, 61) are movable for alignment of the workpiece layers (60, 61) with each other in dependence of the scan result, and that the alignment position of the workpiece layers (60, 61) can be affixed by way of a coupling device (36).

8. Device according to claim 7, characterised in that the clamps (13, 29) are disposed on railed, at least partially driven carriages (7, 20), and that they are movable around a single or multiple axes in relation thereto, and that the alignment station (46) includes a moving device which engages at least one of the clamps (13; 29).

9. Device according to claim 7 or 8, characterised in that the coupling device (36) comprises at least one permanent magnet (18) firmly connected with one of the clamps (13; 29) and a magnetisable plate (35) firmly connected with one of the other clamps (29; 13).

10. Device according to one or several of the claims 7 to 9, characterised in that the conveyer means (1) has a forceably driven main conveyer (4) for the clamps (13, 29), and at least one selectively movable secondary conveyer (5), and that they run in the area of the scanning and alignment station (44, 46) as well as in the treatment or processing station (50) respectively with a short distance between them and parallel with each other, and that the alignment station (46) is only linked to the secondary conveyer (5).

11. Device according to claim 10, characterised in that the main conveyer is a circular conveyer (4), and the secondary conveyer is a gravity-driven suspension-track conveyer (5) including at least one separating means for the carriages (20).

## Revendications

1. Procédé pour amener et positionner au moins deux couches de pièces d'ouvrage souples à traiter ensemble, ou à assembler entre elles, caractérisé en ce que les couches de pièces d'ouvrage sont amenées l'une vers l'autre en position suspendue et avec leur surface plane, sont orientées verticalement et/ou horizontalement l'une par rapport à l'autre, avant qu'elles ne se touchent, et sont fixées réciproquement, pour effectuer l'opération de traitement ou d'assemblage.

2. Procédé selon la revendication 1, caractérisé en ce que les couches de pièces d'ouvrage sont pincées séparément en au moins deux points se trouvant dans la zone d'un bord, et sont maintenues de manière que le reste pende librement.

3. Procédé selon la revendication 1 ou 3, caractérisé en ce que les couches de pièces d'ouvrage sont amenées l'une vers l'autre sur des voies de manutention séparées.

4. Procédé selon la revendication 1 ou 2, caractérisé en ce que les couches de pièces d'ouvrage à traiter ensemble ou à assembler, sont transportées sur une voie de manutention commune et sont réunies dans une zone d'aiguillage.

5. Procédé selon une ou plusieurs des revendications 1 à 4, caractérisé en ce que le contour des couches de pièces d'ouvrage est détecté au moins partiellement de manière optoélectronique, et en ce que les résultats de la détection sont utilisés pour l'orientation des couches de pièces d'ouvrage l'une par rapport à l'autre.

6. Procédé selon la revendication 5, caractérisé en ce que les couches de pièces d'ouvrage sont détectées simultanément pendant qu'elles sont suspendues parallèlement l'une à l'autre.

7. Dispositif de mise en œuvre du procédé selon la revendication 1, caractérisé en ce qu'un poste de détection (44) et un poste d'orientation (46) sont associés à un dispositif de manutention (1) comportant plusieurs pinces (13, 29) se déplaçant le long d'au moins un parcours de transport et servant à recevoir chacune une couche de pièce d'ouvrage (60, 61), les pinces (13; 29) portant les couches de pièces d'ouvrage (60, 61) se déplaçant dans le poste d'orientation (46), pour orienter l'une par rapport à l'autre les couches de pièces d'ouvrage (60, 61) en fonction du résultat de la détection, et en ce que la position d'orientation des couches de pièces d'ouvrage (60, 61) peut être fixée par un dispositif d'accouplement (36).

8. Dispositif selon la revendication 7, caractérisé en ce que les pinces (13, 29) sont disposées sur des chariots (7, 20) guidés sur des rails, au moins en partie motorisés, et peuvent se déplacer par rapport auxdits chariots sur un ou plusieurs axes, et en ce que le poste d'orientation (46) comporte un dispositif de déplacement (45) agissant sur au moins l'une des pinces (13, 29).

9. Dispositif selon la revendication 7 ou 8, caractérisé en ce que le dispositif d'accouplement (36) est formé par au moins un aimant permanent (18) assemblé de manière fixe à l'une des pinces (13; 29), et d'une plaque (35) magnétisable assemblée de manière fixe à l'autre pince (29; 13).

10. Dispositif selon une ou plusieurs des revendications 7 à 9, caractérisé en ce que le dispositif de manutention (1) des pinces (13, 29) comporte un transporteur principal (4) nécessairement entraîné et au moins un transporteur annexe (5) pouvant se déplacer au choix, et en ce que ceux-ci sont parallèles entre eux et faiblement espacés, dans la zone du poste de détection et d'orientation (44, 46) ainsi que dans celle du poste de traitement ou de façonnage (50) et en ce que le poste d'orientation (46) est associé uniquement au transporteur annexe (5).

11. Dispositif selon la revendication 10, caractérisé en ce que le transporteur principal est un transporteur circulaire (4), et le transporteur annexe un transporteur aérien (5) entraîné par gravité comportant au moins un dispositif de séparation pour les chariots (20).

Fig. 1

EP 0 260 331 B1

Fig. 2

Fig. 3

EP 0 260 331 B1

Fig. 4

Fig. 5